# EUROPÄISCHE PATENTSCHRIFT

(11) **EP 1 787 750 B1**
(45) Veröffentlichungstag und Bekanntmachung des Hinweises auf die Patenterteilung: **16.01.2013**
(21) Anmeldenummer: 06023329.3
(22) Anmeldetag: 09.11.2006
(51) Int. Cl.: B23Q 7/14

(54) **Verfahren und Vorrichtung zum Rüsten von Werkstücken für strömungsleitende Teile in Turbinen oder Triebwerken**
Method and apparatus for preparing workpieces for fluid conducting parts in turbines or engines
Dispositif et procédé pour préparer des éléments pour des parties de passage du fluide dans turbines ou moteurs

(30) Priorität: 16.11.2005 CH 18402005
(43) Veröffentlichungstag der Anmeldung: 23.05.2007
(73) Patentinhaber: StarragHeckert AG, 9404 Rohrschacherberg (CH)
(72) Erfinder: Leitold, Günter, 6972 Fussach (AT)
(74) Vertreter: Klein, Friedrich Jürgen

(56) Entgegenhaltungen:
- EP-A- 0 110 815
- DE-C1- 3 521 285
- GB-A- 535 875
- US-A- 5 645 466

## Beschreibung

Die Erfindung betrifft ein Verfahren zum Rüsten von Werkstücken für die Herstellung von strömungsleitenden Teilen für Verdichter oder Turbinen,; insbesondere von Schaufeln für Gasturbinen, Dampfturbinen oder Triebwerken, bei dem die Werkstücke für, die herzustellenden strömungsleitenden Teile ausserhalb einer Werkzeugmaschine in eine Werkstückspannvorrichtung eingespannt, um nachfolgend der Werkzeugmaschine zugeführt zu werden, in der sie durch Fräsen formgebend bearbeitet werden sollen.

In Turbinen- oder Triebwerken wird mittels um eine Drehachse sich drehende Turbinen- oder Triebwerksschaufeln eine Gaskompression vorgenommen. Die Turbinen- und Triebwerksschaufeln weisen für ihre strömungsleitende Funktion in der Regel eine komplizierte, dreidimensional gewundene Blattform auf, sowie einen Fuß- und einen Kopfbereich. Insbesondere aufgrund ihrer komplizierten, relativ dünnen und langen Form sowie der zudem geforderten sehr hohen Genauigkeit stellen sie besonders hohe Anforderungen an die Fertigung. Dies wird weiter dadurch erschwert, dass die Schaufeln in der Regel allseitig bearbeitet werden müssen. Hierdurch ist es erforderlich die Schaufeln in mehreren Aufspannungen durch Fräsbearbeitungen zu fertigen.

Es ist üblich, als Ausgangsmaterial für solche Werkstücke, Stangenmaterial zu verwenden, aus dem in der bearbeitenden Werkzeugmaschine Rohlinge für die Schaufeln abgetrennt, eingespannt und mit der Fertigung begonnen wird. Für die zweite Aufspannung wird das Werkstück in der Regel innerhalb der Werkzeugmaschine vor allem manuell umgespannt. Dieses Fertigungsverfahren hat jedoch den Nachteil retativ langer Nebenzeiten innerhalb der Werkzeugmaschine.

Es ist auch vorbekannt mit einem Roboter das jeweilige Werkstück in die Werkzeugmaschine einzusetzen und anschliessend in der ersten Aufspannung zu bearbeiten. Um das Werkstück in die zweite Aufspannung zu bringen wird das Werkstück mit dem Roboter wieder aus der Werkzeugmaschine entnommen. Nachdem in der Werkzeugmaschine eine für die zweite Aufspannung geeignete Spannvorrichtung angeordnet worden ist, kann dann nachfolgend auch das Werkstücke mit dem Roboter wieder eingesetzt werden. Dieses Verfahren birgt das Risiko hoher Fertigungsungenauigkeiten und möglicher Kollisionen zwischen dem Roboter und der Werkzeugmaschine. Soll die Kollisionsgefahr verringert werden, so müssen in der Regel grössere Werkzeugmaschinen verwendet werden, die eine bessere Handhabung von Werkstücken in der Maschine erlauben.

In der Praxis hat sich insbesondere in jüngerer Vergangenheit die Schaufeltertigung nach dem Prinzip der sogenannten verlorenen Enden weitestgehend durchgesetzt. Bei dieser wird die Fertigung einer vollständigen Schaufel in nur einer Aufspannung vorgenommen. Die beiden Einspannenden des Werkstücks werden nach der vollständigen Fertigung der Schaufel von letzterer abgetrennt. In dem nachveröffentlichten Dokument "Effiziente Schaufelfertigung mit 5-Achs-Technologie von DMG" (http://pressgate.wordpress.com/2011/02/23/effiziente-schaufelfertigung-mit-6-achs-technologie-von-dmg) wird eine derartige, seit dem Jahr 2005 durchgeführte, Schaufelfertigung beschrieben. Dieses Fertigungeprinzip hat unter anderem den Nachteil, dass die beiden Werkstückenden relativ große Teile des Werkstücks darstellen, die lediglich zum Spannen des Werkstücks benötigt werden und nachfolgend Abfall darstellen.

Seiten wird noch das althergebrachte Fertigungsverfahren angetroffen, bei dem von Bedienpersonen Rohlinge der Werkstücke in Spannvorrichtungen eingefügt werden. Hier kann ein Nachteil im zusätzlichen Personalaufwand gesehen werden, der für jedes Werkstück anfällt. Da das Werkstück in der Werkzeugmaschine in die Spannvorrichtung eingespannt wird, ergeben sich auch bei diesem Fertigungsverfahren ungünstige lange Neben- bzw. Gesamtfertigungszeiten.

Aus der DE 35 21 286 C1 ist ein nicht auf strömungsleitende Teile von Verdichter oder Turbinen bezogenes Verfahren bekannt, bei dem mittels auf bodenverlegten Induktionsschleiten verfahrbaren Regalfahrzeugen Werkstückmagazine in den Wirkungsbereich von in Portalbauweise ausgebildeten Robotern gebracht werden. In die Werkstückmagazine sind zuvor von Bedienern manuell Werkstücke eingesetzt worden. Je nach dem was die Regalfahrzeuge transportieren sollen, können diese Spanneinrichtungen für Werkstückmagazine, für Werkstückspannvorrichtungen und für Werkzeugpaletten aufweisen. Greifer der Roboter entnehmen Werkstücke aus den Magazinen und übergeben diese an Stationen, wo die Werkstücke noch ohne Werkstück-Spannvorrichtung räumlich gleichorientiert lagern. Von hier werden die Werkstücke von den Greifern an weitere Transporteinrichtungen übergeben, die sich unmittelbar vor Bearbeitungszentren, vorzugsweise Bohr- und Fräsmaschinen befinden. Jede dieser Transporteinrichtungen ist genau einem Barbeitungszentrum zugeordnet. Bei den Transporteinrichtungen sollen automatisch arbeitende Spannvorrichtungen vorgesehen sein, in denen die Werkstücke automatisiert gespannt werden. Die Werkstücke werden nun in den Arbeitsbereich der Bearbeitungszentren transportiert und anschließen bearbeitet. Die bearbeiteten Werkstücke sollen den beschriebenen Weg in umgekehrter Richtung durchlaufen.

Der Erfindung liegt deshalb die Aufgabe zugrunde, ein Verfahren der eingangs genannten Art sowie eine Fertigungsanlage so weiterzubilden, dass ein hoher Werkstückdurchsatz von kompliziert geformten strömungsleitenden Teilen pro Werkzeugmaschine bei möglichst guter Fertigungsgenauigkeit möglich wird.

Diese Aufgabe wird erfindungsgemäss durch das Verfahren nach Patentanspruch 1 gelöst. Bei diesem ist unter anderem vorgesehen, dass das Werkstück automatisiert in eine Spannvorrichtung außerhalb der Werkzeugmaschine in einer ersten Aufspannung eingefügt wird, das Werkstück in der Spannvorrichtung automatisiert geklemmt wird, nachfolgend das Werkstück zusammen mit der Spannvorrichtung durch eine maschinelle Handhabung der Werkzeugmaschine, insbesondere einer zumindest 4-achsigen - vorzugsweise einer 5- oder 6-achsigen - Maschine, zugeführt wird, das jeweilige Werkstück durch eine weitere maschinelle Handhabung zusammen mit seiner Spannvorrichtung aus der Werkzeugmaschine wieder herausgeführt wird, das Werkstück ferner für eine von der ersten Aufspannung abweichende zweite Aufspannung automatisiert in eine Spannvorrichtung eingefügt und danach für eine weitere Bearbeitung zusammen mit der Spannvorrichtung einer Werkzeugmaschine zugeführt wird.

Die Erfindung sieht einerseits vor, die zur Einspannung der Werkstücke in Spannvorrichtungen für die in der Regel vorgesehenen zumindest zwei Aufspannungen erforderlichen Handhabungsschritte zumindest weitestgehend automatisiert außerhalb der Werkzeugmaschine vorzunehmen. Insbesondere das Einzügen der Werkstücke in Spannvorrichtungen lässt sich mit Vorteil außerhalb der Werkzeugmaschine vornehmen. Hierdurch wird die Werkzeugmaschine nicht durch unproduktive Rüstvorgänge unnötig blockiert. Zudem kann auf diese Weise ein Puffer von bereits eingespannten und zur sofortigen Bearbeitung bereiten Werkstücken geschaffen werden, wodurch auch eine Produktion sichergestellt werden kann, wenn kein Bedienpersonal zur Verfügung steht.

Die Werkstücke können zusammen mit ihrer Spannvorrichtung beispielsweise mittels der Handhabungseinrichtung oder aber mit einer zusätzlichen gesonderten Transporteinrichtung einer oder mehreren Werkzeugmaschinen zugeführt werden. Dies ist mit nur noch geringem technischen Aufwand verbunden und vermeidet zudem die bei einer Handhabung des Werkstücks in der Werkzeugmaschine selbst vorhandene Kollisionsgefahr. Da bei den Schaufeln, auf den sich die Erfindung insbesondere bezieht, zur Komplettbearbeitung in der Regel zwei Aufspannungen erforderlich sind, wirkt sich diese Maßnahme besonders vorteilhaft aus.

Erfindungsgemäss kann somit vorgesehen sein, dass Werkstücke für ihre zwei oder mehr Aufspannungen, die vorzugsweise zur Fertigung unterschiedlicher Abschnitte des Werkstücks genutzt werden, außerhalb der jeweiligen Werkzeugmaschine in Spannvorrichtungen bestückt und jeweils zusammen mit ihrer Spannvorrichtung der Werkzeugmaschine automatisiert zugeführt werden. Ebenso sollte das jeweilige Werkstück nach der ersten Bearbeitung mit Vorteil zusammen mit seiner Spannvorrichtung automatisiert der Werkzeugmaschine entnommen und zur Umspannung vorzugsweise der gleichen Rüstzelle zugeführt werden, in der für das Werkstück bereits die erste Aufspannung erzeugt wurde.

Obwohl aus dem Stand der Technik, wie beispielsweise der DE 35 21 285 C1, schon das automatische Spannen von nicht näher spezifizierten Werkstücken in einer Werkstückspannvorrichtung für lediglich eine Aufspannung vorgeschlagen wurde, findet man für den vorliegenden Anwendungsbereich solche Lösungen nicht. Insbesondere eine zumindest weitgehend durchgängige Automatisierung, wie sie erfindungsgemäß vorgesehen ist, wurde bisher insbesondere aufgrund der Komplexität der für den Anwendungsbereich typischen Werkstücke und der geforderten hohen Fertigungsgenauigkeit für nicht möglich erachtet. Neben den hiermit verbundenen Vorteilen ermöglicht die Erfindung zudem eine hohe Flexibilität, da sämtliche Spannvorgänge vorzugsweise in einer Rüstzelle stattfinden, die einer beliebigen Anzahl von Werkzeugmaschinen zugeordnet sein kann. Damit ist es möglich, jeweils die Werkstücke zeitnah zu Ihrem Fertigungsprozess zu rüsten, für die gerade in einer der Bearbeitungsmaschinen Fertigungskapazität frei ist oder demnächst frei wird. Hierdurch kann die Anzahl der erforderlichen Spannvorrichtungen möglichst gering gehalten werden.

Zu einem möglichst hohen Automatisierungsgrad trägt auch eine Rüstzelle bei, die zumindest einer Werkzeugmaschine zur Bearbeitung von stromungsfeitenden Teilen ; von Verdichtern oder Turbinen, zugeordnet sein kann, wobei die Rüstzelle zumindest eine Handhabungseinrichtung zum Einsetzen des jeweiligen Werkstücks in die Spannvorrichtung aufweist. Zusätzlich sollte die Rüstzelle auch eine automatische und mit der Spannvorrichtung in Wirkverbindung bringbare Betätigungseinrichtung zum Schliessen und/oder Öffnen der Spannvorrichtung aufweisen, wodurch Werkstücke geklemmt und/oder freigegeben werden können. Anders als bei der DE 35 21 285 C1, bei der die einmal mit einem Werkstück bestückten Spannvorrichtungen stets nur noch einer einzigen vorbestimmten Werkzeugmaschine zugeführt werden können, kann erfindungsgemäss die Handhabungseinrichtung und die Betätigungseinrichtung in einer für Rüstvorgänge für eine beliebige Anzahl von Werkzeugmaschinen zuständigen Rüstzelle zusammengefaßt sein. In der Rüstzelle bzw. an einem Rüstplatz können verschiedene Spannvorrichtungen mit Werkstücken bestückt werden, wobei die so bestückten Spannvorrichtungen mit den bereits eingespannten Werkstücken verschiedenen Werkzeugmaschinen zugeführt werden können. Hierdurch wird auch die vorzugsweise nur eine Betätigungsvorrichtung mehreren Werkzeugmaschinen zugeordnet. Im Gegensatz zu der Lösung der DE 35 21 285 C1 kann hierdurch für die zur Ausführung der Rüstvorgänge vorgesehenen Anlagenkomponenten ein hoher Auslastungsgrad erreicht werden, was gleichbedeutend ist mit geringerem Investitionsaufwand. Dadurch, dass die Spannvorrichtungen mit einer der Rüstzelle zugeordneten Betätigungseinrichtung betätigbar sind, können zudem passive Spannvorrichtungen vorgesehen werden, was ebenfalls zu einer Aufwandsreduzierung führt.

Weitere Vorteile können in ebenfalls bevorzugten Ausführungsformen erzielt werden, wenn die verschiedenen Spannvorrichtungen über eine jeweils von der Betätigungseinrichtung ausgeführte Drehbewegung betätigbar sind. Hierzu kann zumindest eine, vorzugsweise sämtliche, der Spannvorrichtungen beispielsweise als Schraubstock ausgebildet sein, der durch Drehbewegung einer Welle automatisiert betätigbar ist. Ein weiterer Vorteil kann erzielt werden, wenn Klemmbacken der Spannvorrichtung ebenfalls automatisiert austauschbar sind. Eine solche Austauschbarkeit kann beispielsweise durch einfache ein- oder mehrdimensionale Fügebewegungen sowie durch einen Formschluss der Klemmbacken in ihrer Endposition innerhalb der Spannvorrichtung erreicht werden.

Durch die Umspannung des Werkstücks von einer ersten in eine zweite Aufspannung besteht die Gefahr von Fertigungsungenauigkeiten, die durch Spannungenauigkeiten verursacht sein können. Anders als bei den meisten vorbekannten Verfahren kann erfindungsgemäß in der ersten Aufspannung zuerst der Blattbereich am Werkstück erzeugt werden. Nachfolgend kann in einer zweiten Aufspannung der Fuß- und/oder Kopfbereich der jeweiligen Schaufel gefertigt werden. Dies ermöglicht gute Spannverhältnisse auch für die zweite Aufspannung. Damit können - anders als bei herkömmlichen Fertigungsverfahren von. Strömungsleitsohaufeln - insbesondere sowohl in der ersten als auch in der zweiten Aufspannung jeweils zueinander parallele Flächen als Spannflächen bereit gestellt werden. Dies gewährleistet stabile Spannverhältnisse, die wiederum eine Voraussetzung für eine hohe Fertigungsgenauigkeit sind. Zudem kann beim Handhaben des Werkstücks zum Spannen und Umspannen jeweils an zueinander parallelen Flächen des Kopf- und/oder Fußbereichs angegriffen werden, was eine einfache und genaue Handhabung des Werkstücks zulässt. Schliesslich hat diese Vorgehensweise den Vorteil stabiler Fräsbedingungen, insbesondere für die Fertigung des besonders kritischen Blattbereichs.

In einer bevorzugten Ausführungsform kann für die Klemmung in der ersten Aufspannung des Werkstücks ein Werkstückabschnitt verwendet werden, an dem in der zweiten Aufspannung eine Kontur des Fuss- oder Kopfbereichs der Schaufel durch Fräsen erzeugt wird. Anders als bei vorbekannten Fertigungsverfahren existiert hier kein "verlorenes Spannende", wodurch die Herstellkosten der Bauteile aufgrund von Materialeinsparungen zusätzlich gesenkt werden können.

Ein bei Turbinenschaufeln weiterer häufig auftretender Grund für die genannten Fertigungsungenauigkeiten kann ein Verzug der Schaufel sein, insbesondere eine Biegung aufgrund ihrer länglich dünnen Form. Um solche Ungenauigkeiten zu vermeiden kann deshalb vorgesehen sein, dass vor dem Umspannen am Werkstück zumindest eine Referenzstelle erzeugt wird. Mit Vorteil können mehrere Referenzstellen vorgesehen sein. Da in diesem Fertigungsstadium das Werkstück in den für den Fuss- und Kopfbereich vorgesehenen Abschnitten noch nicht bearbeitet ist, können mit Vorteil die Referenzstellen in diesen Bereichen vorgesehen sein. Als Referenzstellen können insbesondere eine oder mehrere ebene Flächen erzeugt werden, die eine vorgegebene Position in Bezug auf eine bereits gefertigte Kontur des Werkstücks, insbesondere des Blattbereichs, aufweisen. Mit Vorteil erstrecken sich Referenzflächen in alle drei Raumrichtungen, wobei für jede Raumrichtung zumindest eine Referenzfläche vorgesehen sein kann. Es kann weiter vorgesehen sein, dass die Referenzstellen bzw. -flächen bei einer nachfolgenden Bearbeitung ganz oder teilweise wieder entfernt werden.

Gemäss einer bevorzugten Ausführungsform der Erfindung werden die Position und Lage der zumindest einen Referenzstelle in der zweiten Aufspannung mittels einem an sich vorbekannten Messtaster erfasst. Werkzeugmaschinen mit zusätzlichem Messtaster sind beispielsweise durch die Maschinen des Typs ZT 1000, STC 1000, SX051 und STC 100 bekannt, die von der Anmelderin angeboten werden. Weichen die Daten von den Solldaten der Referenzstellen in der zweiten Aufspannung ab, so können diese Informationen von der Steuerung der Werkzeugmaschine als Korrekturwerte für die Fertigung der Geometrien des Fuss- und/oder Kopfbereichs verwendet werden. Hiermit ist es trotz der Umspannung möglich, die strömungsleitenden Bauteile mit sehr hoher Genauigkeit zu fertigen. Der Aspekt der Erzeugung von Referenzstellen und deren Detektierung hat im Zusammenhang mit strömungsleitenden Bauteilen auch unabhängig von Patentanspruch 1 und Patentanspruch 16 selbständige Bedeutung.

Weitere bevorzugte Ausgestaltungen der Erfindung ergeben sich aus den Ansprüchen, der Beschreibung und der Zeichnung. Die Erfindung wird anhand von in den Figuren rein schematisch dargestellten Ausführungsbeispieten näher erläutert, es zeigen:
- Fig. 1: eine perspektivische Darstellung einer erfindungsgemässen Rüstzelle und einer Werkzeugmaschine zur Ausführung des erfindungsgemässen Verfahrens;
- Fig. 2: eine Rüststation der Rüstzelle aus Fig. 1;
- Fig. 3: eine Rüststation der Rüstzelle aus Fig. 1 in einer weiteren Darstellung;
- Fig. 4: eine Spannvorrichtung mit einem eingeklemmten Werkstück in einer ersten Aufspannung;
- Fig. 5: eine zweite Darstellung der Spannvorrichtung von Fig, 4;
- Fig. 6: die Spannvorrichtung auf einer Rüstposition vor einer Schraubeinrichtung der Rüststation;
- Fig. 7: eine weitere Darstellung der Rüstposition von Fig. 6;
- Fig. 8: eine Spannvorrichtung mit einem Werkstück nach einer Bearbeitung in der ersten Aufspannung;
- Fig. 9: die Spannvorrichtung von Fig. 8 in einer weiteren Darstellung;
- Fig. 10: eine Spannvorrichtung mit einem Werkstück in einer zweiten Aufspannung;
- Fig. 11: die Spannvorrichtung aus Fig. 10 in einer weiteren Darstellung;
- Fig.12: eine die über ein Transportsystem mit mehreren Werkzeugmaschinen verbunden ist;
- Fig. 13: ein perspektivische Darstellung einer Turbinenschaufel.

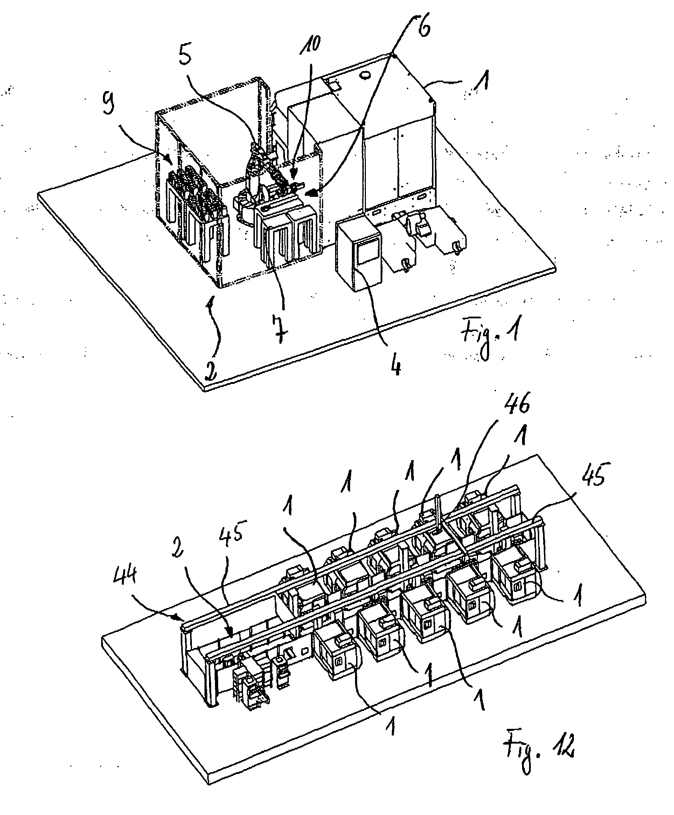

In Fig. 1 ist als Werkzeugmaschine eine Fräsmaschine 1 sowie eine. Rüstzelle 2 dargestellt, in der Werkstücks-Rohlinge 3 für die Bearbeitung in der Fräsmaschine 1 zu Turbinen-oder Triebswerksschaufeln vollständig automatisiert vorbereitet werden. Bei der Fräsmaschine 1 handelt es sich um eine 5-Achsen Bearbeitungsmaschine, mit der auch komplizierte dreidimensionale Formen, wie sie bei den strömungsleitenden Schaufeln insbesondere im Blattbereich gegeben sind, erzeugt werden können. Als Fräsmaschine 1 kann beispielsweise die von der Anmelderin unter der Bezeichnung STC 100 angebotene Werkzeugmaschine zum Einsatz kommen. Sowohl die Fräsmaschine 1 als auch die Rüstzelle 2 sind mit einer üblichen Maschinen- bzw. Zellensteuerung versehen, mit denen jeweils sämtliche Abläufe in der Maschine bzw. Zelle gesteuert werden. Zudem ist eine übergeordnete Steuerung 4 vorhanden, beispielsweise eine SPS-Steuerung, die zur Koordination der nachfolgend noch näher erörterten Abläufe zwischen der Rüstzelle 2 und der Fräsmaschine 1 dient.

Die vorzugsweise unmittelbar neben der Fräsmaschine 1 angeordnete Rüstzelle 2 weist einen Handhabungsroboter 5, eine Rüststation 6, ein Lager 7 für Spannvorrichtungen 8 sowie ein Werkstücklager 9 auf. Als Handhabungsroboter 5, der sämtliche Transport-Handhabungsvorgänge innerhalb der. Zelle im Zusammenhang mit den Werkstücken 3 und den Spannvorrichtungen 8 vornimmt, kann ein von dem Unternehmen Stäubli AG, Seestrasse 238, CH-8810 Horgen, unter der Bezeichnung RX 170 angebotener Roboter vorgesehen sein. Der Roboter 5 ist mit einem Zweibacken-Parallelgreifer 10 versehen, mit dem sowohl Werkstücke als auch Spannvorrichtungen transportiert werden können.

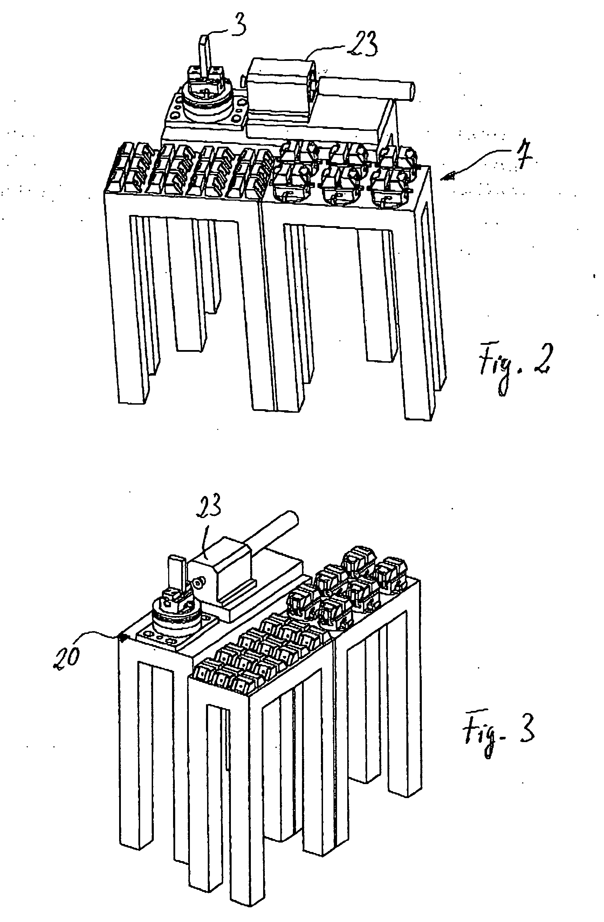

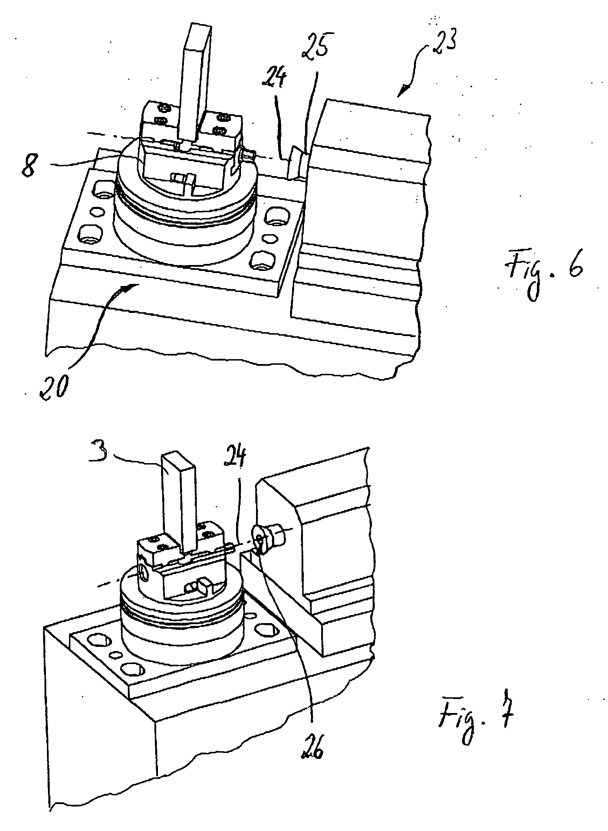

Als Spannvorrichtungen können die in den Fig. 2 bis 11. gezeigten Schraubstöcke 14 vorgesehen sein, die austauschbare parallel zueinander verschiebbare Klemmbacken 15, 16 zur Klemmung von Werkstücken 3 aufweisen. Die Spannvorrichtungen 14 können hierzu mit einer Schnittstelle zur positionsgenauen Aufnahme sowie zur einfachen Entnahme für Spannbacken versehen sein. Im gezeigten Ausführungsbeispiel ist die Schnittstelle als eine Schraubverbindung 17 von Backenträgern ausgebildet. Eine der beiden Klemmbacken 15, 16 wird hierbei jeweils von oben auf jeweils einen der Backenträger aufgesetzt und festgeschraubt. Hierdurch ergibt sich eine leichte Austauschbarkeit und trotzdem eine sichere Anordnung der Backen 15, 16 bei einer Klemmung eines Werkstücks 3. Der Abstand der Backen 15 bzw. 16 zueinander kann in an sich vorbekannter Weise über eine Betätigung einer Spindel 21 verändert werden, bei der eine Drehbewegung der Spindel 21 den Abstand von Klemmbackenträgern 22 zueinander verändert. Die Spindel 21 ragt mit einem ihrer Enden aus der Spannvorrichtung heraus, wobei dieses Spindelende als Sechskant 21a ausgebildet sein kann.

Jede Spannvorrichtung ist mit einem zuvor bereits genannten Spannträger 19 versehen, der mit einer weiteren Schnittstelle zur Aufnahme der Spannvorrichtung 8 in einem nicht näher dargestellten Werkstückträger einer Fräsmaschine versehen ist. Die Schnittstelle kann in an sich vorbekannter Weise ausgebildet sein, beispielsweise wie sie vom Unternehmen EROWA unter der Bezeichnung Erowa ITS100 Spannsystem angeboten wird. Eine solche Schnittstelle kann insbesondere an der Unterseite und an Seitenflächen des Spannträgers ausgebildet sein.

Die Rüststation 6 weist ferner eine in den Fig. 2, 3, 6 und 7 dargestellte Schraubeinrichtung 23 auf, die mit einer entlang einer Längsachse 24 rotierbaren und längsverschieblichen Welle 25 versehen ist. An einem aus der Schraubeinrichtung 23 herausragendem Ende der Welle 25 ist ein Innensechskant 26 vorgesehen, der durch eine Längsverschiebung der Welle 25 auf den Sechskant 21 a der Spannvorrichtung aufgeschoben werden kann. Die jeweilige Spannvorrichtung 8 wird zu diesem Zweck so auf einer Rüstposition 20 vor der Schraubeinrichtung 23 angeordnet, dass die Längsachse der Spindel 21 mit der Längsachse 24 der Welle 25 fluchtet.

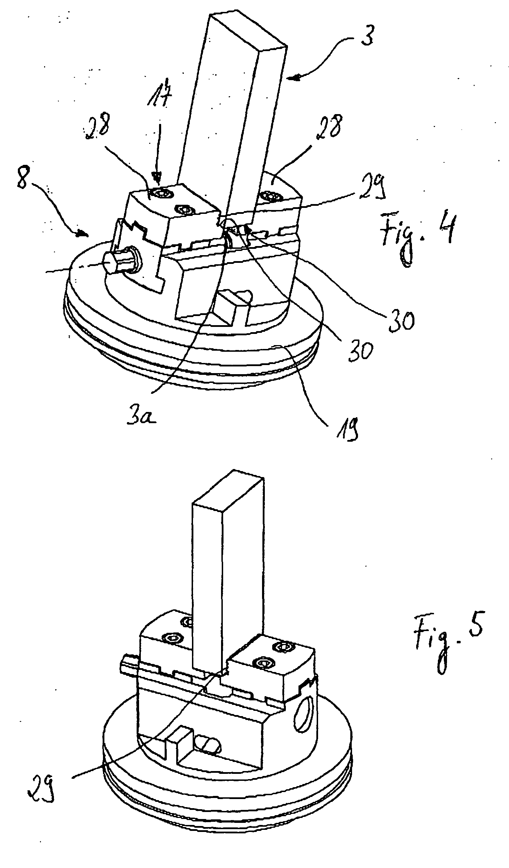

Für eine erste Aufspannung der Werkstücke 8 können für die Spannvorrichtungen die in Fig. 4 und Fig. 5 gezeigten Klemmbacken 28 eines ersten Typs vorgesehen sein, Diese weisen zueinander parallele und im wesentlichen plane Klemmflächen 29 auf. Jeder der Klemmbacken 28 dieses Typs ist zudem mit einer zu den Klemmflächen orthogonal ausgerichteten: Aufstandsfläche 30 versehen (Fig. 4).

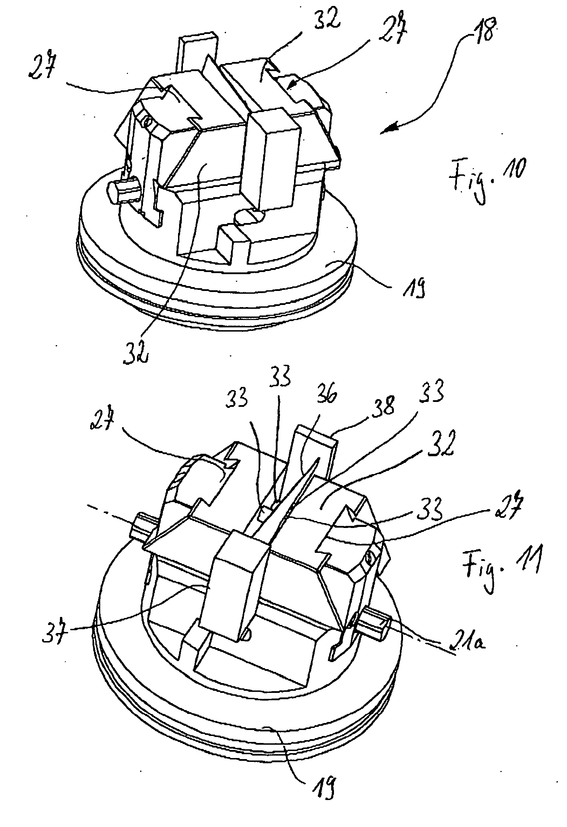

Für eine zweite Aufspannung der Werkstücke kann in einem zweiten Spannvorrichtungstyp 18 ein zweiter Typ von Klemmbacken 32 angeordnet worden, die in den Fig.10 und 11 näher dargestellt sind. Dieser Typ von Spannvorrichtung 18 kann als. Schnittstelle zur Aufnahme von Klemmbacken eine Schwalbenschwanzführung 27, aufweisen. Die beiden sich gegenüberliegenden Schwalbenschwanzführungen 27 einer Spannvorrichtung sind schräg zueinander angeordnet, wobei sich ihr Abstand in Richtung auf einen Spannträger 19 der Spannvorrichtung hin vergrößert. Die Klemmbacken 32 des zweiten Typs können jeweils mit drei Klemmstiften 33 versehen sein, die zur Anlage gegen das beim Zeitpunkt der Verwendung dieses Klemmbackentyps bereits gefertigte Schaufelblatt vorgesehen sind. Ebenso können für die zweite Aufspannung auch Klemmbacken mit formschlüssigen Klemmflächen (bezogen auf das Werkstückprofil) vorgesehen sein.

In anderen, nicht dargestellten Ausführungsformen kann auch nur ein Spannvorrichtungstyp vorgesehen sein, an dem beide Klemmbackentypen 28, 32 angeordnet werden können. Die Klemmbacken 28 des einen Typs können hierbei gegen Klemmbacken 32 des anderen Typs in diesem Spannvorrichtungstyp ausgetauscht worden. Der Austausch sollte vorzugsweise mit dem gleichen Handhabungsroboter vorgenommen werden, mit dem auch die Werkstücke in der Rüstzelle gehandhabt werden.

Zur Ausführung des erfindungsgemässen Rüst- und des erfindungsgemäßen Fertigungsverfahrens bringt der in Fig. 1 gezeigte Handhabungsroboter 5 eine Spannvorrichtung 8 von ihrer Position im Spannvorrichtungslager 7 zur Rüstposition 20 vor der Schraubeinrichtung 23. Anschliessend entnimmt der Handhabungsroboter 5 einen vorkonfektionierten, im wesentlichen quaderförmigen, sogenannten Knüppel als Rohlingswerkstück 3 für eine Schaufel aus dem Werkstücklager 9. Da die Schaufel aus dem Vollen gefräst wird, sind die minimalen Aussenmasse des Werkstücks 3 durch die maximalen Erstreckungen der fertigen Schaufel in die drei Raumrichtungen vorgegeben. Das Werkstück 3 wird dann vom Handhabungsroboter 5 mit einer seiner Stirnseiten 3a zu den Aufstandsflächen 30 der beiden Spannbacken 28 weisend in die Spannvorrichtung 8 eingesetzt.

Sobald das Werkstück 3 gegen die Aufstandsflächen 30 anliegt betätigt die Steuerung 4 die Schraubeinrichtung 23, deren Welle 25 daraufhin mit ihrem Innensechskant über den Sechskant 21 a der Spindel geschoben wird. Die Rotationsbewegung der Welle 25' der Schraubeinrichtung wird somit auf die Spindel 21 der Spannvorrichtung 8 übertragen, was zu einem Schliessen der Klemmbacken 28 bzw. Klemmen des Werkstücks in der Spannvorrichtung führt. Das Werkstück 3 ist damit in Richtung seiner Längserstreckung senkrecht zu den Aufstandsflächen 30 und parallel zu den Klemmflächen 29 mit jeweils grossflächigem Kontakt eingeklemmt.

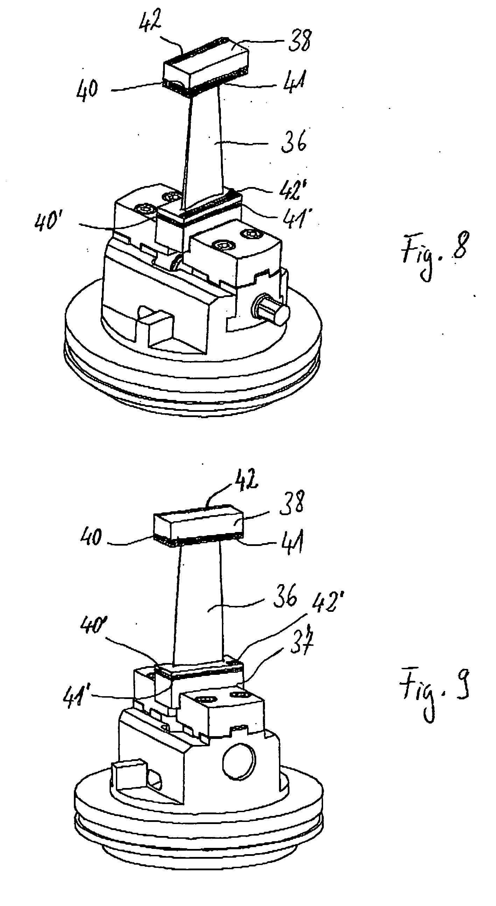

Nun kann der Handhabungsroboter 5 das Werkstück 3 durch Transport der Spannvorrichtung 8 zur Fräsmaschine 1 oder in einen Puffer (nicht dargestellt) überführen, in dem die Spannvorrichtung bis zur Bearbeitung verbleibt. Sobald die Spannvorrichtung 8 durch eine Handhabungsvorrichtung, insbesondere den gleichen Handhabungsroboter 5 in die Werkstückaufnahme der Fräsmaschine 1 eingesetzt ist, führt letztere am Werkstück 3 eine Fräsbearbeitung durch. Hierbei wird zumindest im wesentlichen die Geometrie des Blattbereichs 36 der Schaufel erzeugt, der in den Fig. 8 bis 11 gezeigt ist. Andere Geometrien des Bauteils werden bei diesem bevorzugten Ausführungsbeispiel in dieser Aufspannung noch nicht erzeugt. Insbesondere sowohl der Fußbereich 37 als auch der Kopfbereich 38 der entstehenden Schaufel sind noch unbearbeitet.

Bei dieser Fräsbearbeitung werden mit dem Fräswerkzeug jedoch am Werkstück noch eine oder mehrere Referenzstellen gefräst. Es können sich hierbei beispielsweise um zumindest zwei zueinander orthogonal ausgerichtete ebene Flächen 40, 41, 42; 40', 41', 42' handeln, die in Bezug auf die Geometrie des Blattbereichs 36 eine vorgegebene bestimmte Orientierung aufweisen. Die Referenzflächen 40-42; 40'-42' können unmittelbar nebeneinander liegen und aneinander angrenzen, beispielsweise im Bereich einer Kante des sonst noch unbearbeiteten Kopfbereichs 38. Die Referenzflächen können sich auf einem Teil der Seitenflächen des Kopfbereichs 38 erstrecken und sich hierbei insbesondere jeweils über die gesamte Länge der jeweiligen Seitenflächen erstrecken.

Bevorzugt sind aber mehrere Referenzstellen, die zudem auch am Werkstück weiter auseinander liegen können. Eine besonders gute Erkennung von beispielsweise einem oftmals auftretenden Verzug des Blattbereichs 36 unmittelbar nach seiner Fertigung kann durch Referenzstellen sowohl am Fuß- als auch am Kopfbereich 37, 38 ermöglicht werden. Am Fuss- als auch am Kopfbereich 37, 38 können insbesondere jeweils zumindest drei Referenzflächen 40-42, 40'-42' vorgesehen sein, die jeweils zu den beiden anderen Referenzflächen des gleichen Bereichs orthogonal ausgerichtet sind. Da die Geometrien des Fuß- und Kopfbereichs in diesem Stadium noch nicht erzeugt sind, werden die Referenzstellen an den dafür vorgesehenen Rohlingsbereichen des Werkstückes erzeugt.

In diesem Fertigungszustand wird das Werkstück 3 zusammen mit der Spannvorrichtung 8 mittels dem Handhabungsroboter aus der Fräsmaschine 1 entnommen und wiederum der Rüstzelle 2 zugeführt. Ist die Schraubeinrichtung 23 zu diesem Zeitpunkt besetzt kann die Spannvorrichtung wiederum in einen Puffergelangen, bevor sie mit dem Handhabungsroboter wieder in die Rüstposition 20 vor der Schraubeinrichtung gesetzt wird. Hier greift die Schraubeinrichtung 23 wieder an der Spindel 21 an und öffnet die Klemmbacken 28 durch eine der beim Schliessvorgang entgegen gesetzten Drehrichtung der Spindel.

Anschliessend kann der Handhabungsroboter 5 das Werkstück 8 aus der Spannvorrichtung 8 entnehmen und gegebenenfalls wieder in das Spannvorrichtungslager 7 einfügen. Nun wird die Spannvorrichtung 8 gegen eine andere Spannvorrichtung 18 ausgetauscht, welche mit den in den Fig. 10 und 11 gezeigten Klemmbacken 32 bereits versehen sind. Diese weisen jeweils entweder formflächige Klemmflächen oder die mindestens drei Klemmstifte 33 auf, die nicht in einer Reihe angeordnet sind. Die Positionen und die Geometrie von stirnseitigen Klemmflächen der Klemmstifte 33 entsprechen hierbei in vorteilhafter Weise der Sollkontur des Blatts im Kontaktbereich mit den Klemmstiften 33.

Der Handhabungsroboter 5 kann jetzt das zuvor bereits in der ersten Aufspannung bearbeitete Werkstück 3 aus dem Werkstücklager 9 entnehmen und in der in den Fig. 10 und 11 dargestellten Weise in die Spannvorrichtung 8 einsetzen. Durch eine Betätigung der Schraubeinrichtung 23 mit einer Drehrichtung in Schliessrichtung wird dann das Werkstück im Blattbereich 36 durch die Stifte 33 bzw. durch formschlüssige Klemmflächen geklemmt. Das Werkstück ist damit in der Spannvorrichtung 8 in einer zweiten Aufspannung aufgenommen und eingespannt, in welcher der Kopf- und der Fussbereich 37, 38 seitlich über die Klemmbacken 32 vorsteht und diese Bereiche damit für eine Bearbeitung zugänglich sind. Gegenüber der ersten Aufspannung ist das Werkstück in der zweiten Aufspannung um 90° um seine Längsachse gekippt.

Damit kann die Spannvorrichtung 8 mit dem Handhabungsroboter 5 zur Fräsmaschine 1 oder aber wiederum in einen Puffer gebracht werden, wo sie verbleibt, bis die Fräsmaschine 1 für die Bearbeitung frei ist. In beiden Fällen fügt im gezeigten Ausführungsbeispiel der Erfindung der Handhabungsroboter 5 die Spannvorrichtung 8 mit ihrer Schnittstelle wieder in die Werkstückaufnahme der Fräsmaschine ein. Die Fräsmaschine 1 fährt nun mit einem nicht näher dargestellten, jedoch an sich vorbekannten Messtaster, Sollpositionen der Referenzflächen 40-42 an und ertastet dann die tatsächlichen Positionen und Ausrichtungen der Referenzflächen 40-42. Abweichungen gegenüber den Sollpositionen werden durch die Steuerung 4 bestimmt und als Korrektwerte bei der weiteren Bearbeitung berücksichtigt. Hierdurch ist eine Kompensation von verschiedenen Fehlern möglich, insbesondere eine Kompensation eines Verzugs aufgrund der relativ dünnen länglichen Geometrie des Blattbereichs 36, der bei Fertigung des Blattbereichs in der ersten Aufspannung entstehen kann.

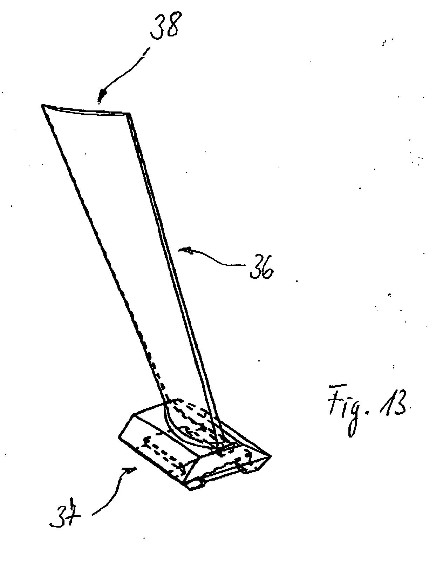

Nun kann die Fräsbearbeitung in der zweiten Aufspannung beginnen, in der sowohl der Kopfbereich 38 als auch der Fußbereich 37 am Werkstück erzeugt werden. Da eine Kompensation von einem möglichen Verzug des Werkstücks stattfindet, können die Geometrien des Kopf- und Fussbereichs.37, 38 vorgabegerecht zum Blattbereich 36 gefertigt werden Nach dieser Bearbeitung wird die Spannvorrichtung 8 aus der Werkzeugmaschine entnommen und wieder auf der Rüstposition 20 abgesetzt. Mittels der Schraubeinrichtung 23 wird die Spannvorrichtung 8 geöffnet, so dass der Handhabungsroboter 5 das in Fig. 13 dargestellte fertige. Werkstück entnehmen und in ein Lager zum Abtransport absetzen kann.

In Fig. 12 ist eine weitere Ausführungsform gezeigt, bei der eine Rüstzelle. 2, beispielsweise die in Fig. 1 gezeigte Rüstzelle 2, mehreren Werkzeugmaschinen 1 zugeordnet ist. Da die Kapazität einer solchen Rüstzelle 2 weit über die Beschickung von nur einer Werkzeugmaschine 1 im Zusammenhang mit der Fertigung von Turbinen- oder Triebwerksschaufeln hinausgeht, kann die Rüstzelle 2 mit einer Transporteinrichtung 44 verbunden sein, mit dem Werkstücke und ihre Spannvorrichtungen von und zu mehreren Werkzeugmaschinen 1 gebracht werden. Im dargestellten Ausführungsbeispiel ist es eine Überkopf-Transporteinrichtung mit zwei Schienen 45, an denen jeweils eine weitere Handhabungsvorrichtung 46 verfahrbar angebracht ist. Übersteigt die Fertigungskapazität der Werkzeugmaschinen 1 die Rüstkapazität der Rüstzelle 2 so können entweder mehrere Rüstzellen oder aber eine einzige, jedoch um einen oder mehrere Handhabungsroboter 5 (Fig. 1), um eine oder mehrere Schraubeinrichtungen 23 sowie um weitere Lager erweiterte Rüstzelle vorgesehen sein.

### Bezugszeichenliste

- 1: Fräsmaschine
- 2: Rüstzelle
- 3: Werkstück
- 3a: Stirnseite
- 4: Steuerung
- 5: Handhäbüngsroboter
- 6: Rüststation
- 7: Spannvorrichtungslager
- 8: Spannvorrichtung
- 9: Werkstücklager
- 10: Zweibacken-Paralleigreifer
- 14: Schraubstock
- 15: Klemmbacke
- 16: Klemmbacke
- 17: Schraubverbindung
- 18: Spannvorrichtung
- 19: Spannträger
- 20: Rüstposition
- 21: Spindel
- 21 a: Sechskant
- 22: Klemmbackenträger
- 23: Schraubeinrichtung
- 24: Längsachse
- 25: Welle
- 26: Innensechskant
- 27: Schwalbenschwanzführung
- 28: Klemmbacken
- 29: Klemmflächen
- 30: Aufstandsfläche
- 32: Klemmbacken
- 33: Klemmstift
- 36: Blattbereich
- 37: Fussbereich
- 38: Kopfbereich
- 40: Referenzfläche
- 41: Referenzfläche
- 42: Referenzfläche
- 40': Referenzfläche
- 41': Referenzfläche
- 42': Referenzfläche
- 44: Transporteinrichtung
- 45: Schiene
- 46: Handhabungsvorrichtung

## Patentansprüche

1. Verfahren zum Rüsten eines Werkstücks für die Herstellung eines strömungsleitenden Bauteile für einen Verdichter oder eine Turbine, insbesondere einer Schaufel für eine Gasturbine, Dampfturbine oder ein Triebwerk, bei dem das Werkstück (3) für das herzustellende strömungsleitende Teil außerhalb einer Werkzeugmaschine (1) in eine Werkstückspannvorrichtung (8, 18) eingespannt wird, um nachfolgend der Werkzeugmaschine zugeführt zu werden, In der es durch Fräsen formgebend bearbeitet wird, **dadurch gekennzeichnet, dass** das jeweilige Werkstück (3) automatisiert mittels eines Handhabungsroboters (5) in eine Spannvorrichtung (8, 18) ausserhalb der Werkzeugmaschine in einer ersten Aufspannung eingefügt wird, das Werkstück in der Spannvorrichtung (8) automatisiert geklemmt wird, nachfolgend das Werkstück zusammen mit der Spannvorrichtung (8) durch eine maschinelle Handhabung durch den Handhabungsroboter (5) der Werkzeugmaschine (1) zugeführt wird, das jeweilige Werkstück durch eine weitere maschinelle Handhabung des Handhabungsroboters (5) zusammen mit seiner Spannvorrichtung (8) aus der Werkzeugmaschine wieder herausgeführt wird, der Handhabungsroboter das Werkstück aus der Spannvorrichtung (8) entnimmt, das Werkstück ferner für eine von der ersten Aufspannung abweichende zweite Aufspannung durch den Handhabungsroboter (5) automatisiert in eine Spannvorrichtung (8) eingefügt und automatisiert geklemmt wird und danach für eine weitere Bearbeitung zusammen mit der Spannvorrichtung durch den Handhabungsroboter (5) einer Werkzeugmaschine zugeführt wird, wobei in der ersten Aufspannung zumindest eine Referenzstelle (40, 41, 42; 40', 41', 42') erzeugt wird, deren Position in zumindest einer nachfolgenden Aufspannung ermittelt wird und nach Erzeugung der Referenzstelle (40, 41, 42; 40', 41', 42') und der Umspannung des Werkstückes in die zweite Aufspannung Positions- und/oder Lageinformationen der zumindest einen Referenzstelle detektiert werden und diese Informationen bei der weiteren Bearbeitung berücksichtigt werden.

2. Verfahren nach Anspruch 1, **dadurch gekennzeichnet, dass** in der ersten Aufspannung ein strömungsleitender Bereich, insbesondere zumindest ein Tel eines Blattbereichs (36) einer Schaufel, erzeugt wird.

3. Verfahren nach Anspruch 1 oder 2, **dadurch gekennzeichnet, dass** für die Klemmung des Werkstücks (3) in der ersten Aufspannung ein Bereich des Werkstücks verwendet wird, an dem in einer nachfolgenden Aufspannung der Fuss- und/oder Kopfteil (37, 38) des strömungsleitenden Teils erzeugt wird.

4. Verfahren nach einem der vorhergehenden Ansprüchen, **dadurch gekennzeichnet, dass** das Werkstück (3) in seiner ersten Aufspannung in eine Spannvorrichtung (8, 18) mit einem Zweibackenschraubstock (14) mit zumindest im wesentlichen parallelen ebenen Klemmflächen eingefügt wird, in der das Werkstück (3) mit Seitenflächen parallel zu den Klemmflächen der Spannvorrichtung ausgerichtet ist und an diesen Seitenflächen geklemmt wird.

5. Verfahren nach einem der vorhergehenden Ansprüche, **dadurch gekennzeichnet, dass** In der zweiten Aufspannung zumindest der Fuss- und/oder Kopfbereich (37, 38) des strömungsleitenden Teils formgebend bearbeitet wird.

6. Verfahren nach einem der vorhergehenden Ansprüche, **dadurch gekennzeichnet, dass** die Spannvorrichtung (8, 18) durch Betätigung einer Welle der Spannvorrichtung mit einer eine Drehbewegung erzeugenden Betätigungseinrichtung geöffnet oder geschlossen wird.

7. Verfahren nach Anspruch 6, **dadurch gekennzeichnet, dass** zum Öffnen und/oder Schliessen der Betätigungseinrichtung ein Betätigungselement der Betätigungseinrichtung relativ auf die Spannvorrichtung (8, 18) zugestellt wird, hierbei eine Wirkverbindung mit der Welle hergestellt wird und mit der Drehbewegung der Betätigungseinrichtung die Spannvorrichtung geöffnet oder geschlossen wird.

8. Verfahren nach einem der Ansprüche 6 oder 7, **dadurch gekennzeichnet, dass** die Betätigungseinrichtung eine Schraubeinrichtung (23) ist.

9. Verfahren nach einem der vorhergehenden Ansprüche, **dadurch gekennzeichnet, dass** mittels einer Handhabungseinrichtung Klemmbacken (28, 32) von zumindest einer Spannvorrichtung gegen andere Klemmbacken (28, 32) ausgetauscht werden.

10. Verfahren nach einem der vorhergehenden Ansprüche, **dadurch gekennzeichnet, dass** das Werkstück in den zumindest zwei Aufspannungen mit unterschiedlichen Klemmbacken (28, 32) gehalten wird.

11. Verfahren nach einem der vorhergehenden Ansprüche, **dadurch gekennzeichnet, dass** mit lediglich einer Handhabungseinrichtung sowohl Werkstücke (3) als auch Spannvorrichtungen (8, 18) gehandhabt werden.

12. Verfahren nach Anspruch 11, **dadurch gekennzeichnet, dass** mit der Handhabungseinrichtung sowohl Werkstücke als auch Spannvorrichtungen zur gleichen Rüstposition (20) gebracht werden.

13. Verfahren nach einem der vorhergehenden Ansprüche, **dadurch gekennzeichnet, dass** das Werkstück nach der Entnahme aus der Werkzeugmaschine für den nachfolgenden Rüstvorgang zur gleichen Rüstposition (20) gebracht wird, an der es bereits zuvor für die erste Aufspannung in eine Spannvorrichtung eingefügt wurde.

## Claims

1. A method for equipping a work piece for manufacturing a flow-conducting component for a compressor or a turbine, in particular a blade for a gas turbine, steam turbine or an engine, in which the work piece (3) for the flow-conducting part to be manufactured is chucked into a work piece clamping device (8, 18) outside of a work piece machine (1), so as to be subsequently supplied to the work piece machine. In which it is machined through milling, **characterized in that** the respective work piece (3) is automatically inserted by means of a handling robot (5) into a clamping device (8, 18) outside of the work piece machine in a first clamping operation, the work piece is automatically chucked in the clamping device (8), after which the work piece along with the clamping device (8) is fed to the work piece machine (1) in a mechanical handling operation by the handling robot (5), the respective work piece along with its clamping device (8) is again guided out of the work piece machine in another mechanical handling operation by the handling robot (5), the handling robot removes the work piece from the clamping device (8), the work piece is further automatically inserted into a clamping device (8) and automatically chucked by the handling robot (5) for a second clamping operation that deviates from the first clamping operation, after which it is fed along with the clamping device to a work piece machine by the handling robot (5) for continued machining, wherein at least one reference site (40, 41, 42; 40', 41', 42') is generated in a first clamping operation, whose position is acquired in at least one subsequent clamping operation and, after the reference site (40, 41, 42; 40' 41', 42') has been generated and he work piece has been rechucked in the second clamping operation, position and/or location information of the at least one reference site is detected, and this information is taken into account during further machining.

2. The method according to claim 1, **characterized in that** a flow-guiding area, in particular at least part of a blade area (36) of a blade, is generated in the first clamping operation.

3. The method according to claim 1 or 2, **characterized in that** the work piece (3) is chucked in the first clamping operation using an area of the work piece on which the base and/or head section (37, 38) of the flow-guiding part is generated in a subsequent clamping operation.

4. The method according to one of the preceding claims, **characterized in that** the work piece (3), in its first clamping operation, is inserted into a clamping device (8, 18) with a two-jaw vice (14) having at least, essentially parallel, flat clamping surfaces, in which the work piece (3) is aligned with its lateral surfaces parallel to the clamping surfaces of the clamping device, and is chucked on these lateral surfaces.

5. The method according to one of the preceding claims, **characterized in that**, in the second clamping operation, at least the base and/or head region (37, 38) of the flow-guiding section is machined.

6. The method according to one of the preceding claims, **characterized in that** the clamping device (8, 18) is opened or closed with an activating device that generates a rotational movement by activating a shaft of the clamping device.

7. The method according to claim 6, **characterized in that** the activating device is opened and/or closed by blocking an activating element of the activating device relative to the clamping device (8, 18), in the process establishing a functional connection with the shaft, and opening or closing the clamping device in response to the rotational movement of the activating device.

8. The method according to one of claims 6 or 7, **characterized In that** the activating device is a screw device (23).

9. The method according to one of the preceding claims, **characterized in that** a handling device is used to replace vices (28, 32) of at least one clamping device with other vices (28, 32).

10. The method according to one of the preceding claims, **characterized in that** the work piece is held by different vices (28, 32) in the at least two clamping operations.

11. The method according to one of the preceding claims, **characterized in that** both work pieces (3) and clamping devices (8, 18) are handled with only one handling device.

12. The method according to claim 11, **characterized in that** the handling device is used to bring both work pieces and clamping devices to the same equipping position (20).

13. The method according to one of the preceding claims, **characterized in that**, after it has been removed from the machine tool, the work piece is brought to the same equipping position (20) at which it had already been inserted into a clamping device previously in the first clamping operation for the subsequent equipping process.

## Revendications

1. Procédé destiné à préparer une pièce à usiner pour la fabrication d'un composant conducteur de courant pour un compresseur ou une turbine, en particulier une aube pour une turbine à gaz, une turbine à vapeur ou un appareil moteur, dans lequel la pièce à usiner (3) pour le composant conducteur de courant à fabriquer est serrée dans un dispositif de serrage de pièce à usiner (8, 18) hors d'une machine-outil (1), pour être amenée ensuite à la machine-outil dans laquelle elle est usinée par fraisage pour lui donner une forme, **caracterisé en ce que** la pièce à usiner (3) respective est introduite de manière automatisée dans un premier serrage dans un dispositif de serrage de pièce à usiner (8, 18) hors de la machine-outil via un robot de manipulation (5), la pièce à usiner est bloquée de manière automatisée dans le dispositif de serrage (8), ensuite la pièce à usiner est amenée à la machine-outil (1) conjointement avec le dispositif de serrage (8) par une manipulation mécanique par le robot de manipulation (5), la pièce à usiner respective est sortie de nouveau de la machine-outil conjointement avec son dispositif de serrage (8) par une autre manipulation mécanique du robot de manipulation (5), le robot de manipulation prélève la pièce à usiner du dispositif de serrage (8), la pièce à usiner est ensuite introduite de manière automatisée par le robot de manipulation (5) dans un dispositif de serrage (8) pour un deuxième serrage s'écartant du premier serrage, et bloquée de manière automatisée, et amenée ensuite à une machine-outil conjointement avec le dispositif de serrage par le robot de manipulation (5) pour un usinage ultérieur, sachant que dans le premier serrage, au moins un point de référence (40, 41, 42; 40', 41', 42') est produit dont la position est calculée dans au moins un serrage consécutif et après production du point de référence (40, 41, 42 ; 40', 41', 42') et serrage de la pièce à usiner dans le deuxième serrage, des informations sur la position et/ou la situation de l'au moins un point de référence sont détectées et ces informations sont prises en compte pour la suite de l'usinage.

2. Procédé selon la revendication 1, **caractérisé en ce que** dans le premier serrage, une partie conductrice du courant en particulier au moins une partie d'une lame (36) d'une aube, est produite.

3. procédé selon la revendication 1 ou 2, **caractérisé en ce que** pour le blocage de la pièce à usiner (3) dans le premier serrage, une partie de la pièce à usiner est employée sur laquelle, dans un serrage consécutif, la partie de tête et/ou de pied (37, 38) de la partie conductrice de l'électricité est produite.

4. Procédé selon l'une des revendications précédentes, **caractérisé en ce que** la pièce à usiner (3), dans son premier serrage, est introduite dans un dispositif de serrage (8, 18) comprenant un premier étau de serrage à deux mâchoires (14) comprenant au moins deux surfaces de blocage essentiellement parallèles et planes, dans lequel la pièce à usiner (3) est alignée avec les surfaces latérales parallèles aux surfaces de blocage du dispositif de serrage et bloquée sur ces surfaces latérales.

5. Procédé selon l'une des revendications précédentes, **caractérisé en ce que** dans le deuxième serrage, au moins la partie de tête et/ou de pied (37, 38) de la partie conductrice de l'électricité est usinée en lui donnant une forme.

6. Procédé selon l'une des revendications précédentes, **caractérisé en ce que** le dispositif de serrage (8, 18) est ouvert ou fermé par actionnement d'un arbre du dispositif de serrage avec un dispositif d'actionnement produisant une rotation.

7. Procédé selon la revendication 6, **caractérisé en ce que** pour ouvrir et/ou, fermer le dispositif d'actionnement, un élément d'actionnement du dispositif d'actionnement est avancé par rapport au dispositif de serrage (8, 18), ce qui crée une liaison fonctionnelle avec l'arbre et le dispositif de serrage est ouvert ou fermé par le mouvement de rotation du dispositif d'actionnement.

8. Procédé selon la revendication 6 ou 7, **caractérisé en ce que** le dispositif d'actionnement est un dispositif à vis (23).

9. Procédé selon l'une des revendications précédentes, **caractérisé en ce que** via un dispositif de manipulation, des mâchoires de blocage (28, 32) d'au moins un dispositif de serrage sont changées contre d'autres mâchoires de blocage (28, 32).

10. Procédé selon l'une des revendications précédentes, **caractérisé en ce que** la pièce à usiner est maintenue dans les au moins deux serrages avec des mâchoires de blocage (28, 32) différentes.

11. Procédé selon l'une des revendications précédentes, **caractérisé en ce qu'**avec un seul dispositif de manipulation, tant des pièces à usiner (3) que des dispositifs de serrage (8, 18) peuvent être manipulés.

12. Procédé selon la revendication 11, **caractérisé en ce qu'**avec le dispositif de manipulation, tant des pièces à usiner que des dispositifs de serrage peuvent être amenées à la même position de préparation (20).

13. Procédé selon l'une des revendications précédentes, **caractérisé en ce que** la pièce à usiner, après prélèvement hors de la machine-outil, est placée pour poursuivre la procédure de préparation, à la même position de préparation (20) qu'à laquelle elle a déjà été introduite auparavant pour le premier serrage dans un dispositif de serrage.
